Europäisches Patentamt

European Patent Office

Office européen des brevets

(19)

(11) Numéro de publication: **0 006 819**
B1

(12) **FASCICULE DE BREVET EUROPEEN**

(45) Date de publication du fascicule du brevet: 27.06.84

(51) Int. Cl.³: **B 60 K 5/12, F 16 F 9/10**

(21) Numéro de dépôt: **79400445.7**

(22) Date de dépôt: **29.06.79**

(54) Dispositif de suspension, notamment de moteur d'un véhicule automobile.

(30) Priorité: 03.07.78 FR 7819797
23.05.79 FR 7913128

(43) Date de publication de la demande:
09.01.80 Bulletin 80/1

(45) Mention de la délivrance du brevet:
27.06.84 Bulletin 84/26

(84) Etats contractants désignés:
AT DE GB IT NL SE

(56) Documents cités:
FR - A - 2 057 808
FR - A - 2 356 847
FR - A - 2 372 351
FR - A - 2 375 501
FR - A - 2 384 999
FR - A - 2 389 801
GB - A - 811 748
US - A - 2 387 065
US - A - 2 387 066
US - A - 2 524 405
US - A - 3 368 807

(73) Titulaire: AUTOMOBILES PEUGEOT
75, avenue de la Grande Armée
F-75116 Paris (FR)

(72) Inventeur: Pham, Anh Tuan
16 rue de Mont Didier
F-78310 Elancourt (FR)

(74) Mandataire: Beauchamps, Georges et al,
Cabinet Z. Weinstein 20, avenue de Friedland
F-75008 Paris (FR)

Courier Press, Leamington Spa, England.

## Description

La présente invention a essentiellement pour objet un dispositif de suspension destiné à être monté entre deux éléments dont au moins l'un peut être relativement mobile par rapport à l'autre sous l'effet d'excitations diverses.

Un exemple d'utilisation d'un dispositif conforme à l'invention est trouvé dans la suspension du moteur ou d'autres organes mécaniques dans la caisse d'un véhicule automobile.

Dans une telle application, un dispositif de suspension adéquat doit en effet répondre à plusieurs impératifs contradictoires.

Tout d'abord, dans la zone des basses fréquences, c'est-à-dire environ 10 Hertz, les fréquences propres du moteur suspendu doivent être notablement différentes des fréquences propres des trains de suspension avant ou arrière du véhicule pour éviter les couplages conduisant au mauvais comportement routier d'une part et à un inconfort d'autre part.

En outre, la suspension du moteur doit procurer un amortissement important dans la zone de basses fréquences précitées afin d'éviter les trépidations du moteur lors du roulement sur mauvaise route.

Par ailleurs, dans la zone des fréquences élevées, c'est-à-dire entre sensiblement 100 et 200 Hertz, les moyens de suspension du moteur ne doivent pas transmettre de vibrations excessives susceptibles d'engendrer du bruit. Il faut donc aussi diminuer l'amortissement aux fréquences élevées.

Or, on a constaté qu'en utilisant par exemple des blocs en caoutchouc simplement adhérisé sur des armatures métalliques, on pouvait obtenir deux sortes de résultats:

— si la suspension du moteur est raide, elle engendre peu de trépidations, mais elle transmet par contre beaucoup de bruit à des régimes élevés du moteur;
— si par contre la suspension est souple, elle transmet peu de bruit à fréquence élevée, mais elle engendre des trépidations aux basses fréquences.

On connait déjà, d'après le brevet FR—A—2356847 par exemple, un dispositif de suspension d'un élément porté à un élément porteur et comprenant au moins un support élastiquement déformable, par exemple en caoutchouc, agencé entre deux armatures solidaires desdits éléments de façon à définir une chambre étanche, laquelle chambre contient un fluide et est partagée en deux par une cloison formée d'une partie élastique solidaire de l'un desdits éléments et portant un organe pourvu d'au moins un orifice calibré permettant le passage du fluide d'un côté vers l'autre de la cloison.

Un tel dispositif permet, jusqu'à un certain degré, d'atténuer les vibrations à haute fréquence grâce aux déformations locales de la cloison séparatrice.

Toutefois, la demanderesse a constaté que l'amortissement aux fréquences élevées restait trop important, ce qui n'empêchait pas les bruits du moteur se produisant aux fréquences élevées de se propager directement à la caisse du véhicule.

La présente invention a notamment pour but de remédier à cet inconvénient en proposant un nouveau dispositif de suspension caractérisé en ce que l'organe précité est constitué par un bloc massif suspendu à la cloison qui, en raison de l'inertie du bloc et de l'élasticité de la cloison, se déforme avec un retard ou déphasage par rapport au déplacement de l'élément porté, de nature à provoquer à travers l'orifice précité et pour une fréquence dite haute, de l'ordre de 100 à 200 Hz, un débit de fluide inversé par rapport à celui obtenu à des fréquences plus basses, entre les deux parties de la chambre étanche.

C'est précisément le bloc massif qui, selon l'invention, et comme on le décrira plus loin, agit de manière à diminuer l'amortissement aux fréquences élevées, étant entendu que l'amortissement existe et est nécessaire pour les fréquences basses.

On ajoutera encore que le bloc massif aura un poids bien défini en fonction de la rigidité de la cloison séparatrice, et cela de telle façon que la fréquence propre de l'ensemble bloc-cloison soit accordée sur les fréquences élevées.

Suivant un mode de réalisation de l'invention, une enveloppe déformable est rapportée sur le bloc pour fermer la chambre étanche et isoler le fluide par rapport aux armatures.

Suivant une autre caractéristique de l'invention, dans le bloc est fixée une pièce tubulaire faisant saillie à la partie inférieure de celui-ci, laquelle pièce comporte l'orifice précité à l'une des ses extrémités et est supportée avec le bloc, par la cloison élastique.

On précisera encore ici que l'amplitude du mouvement du bloc est fixée par des cales d'épaisseur interposées de part et d'autre de la cloison, et que les mouvements du bloc sont limités par une couronne solidaire de l'une des armatures et sur laquelle est montée ou adhérée la cloison élastique.

D'autres caractéristiques et avantages de l'invention apparaîtront mieux dans la description détaillée qui suit et se réfère aux dessins annexés, donnés uniquement à titre d'exemple et dans lesquels:

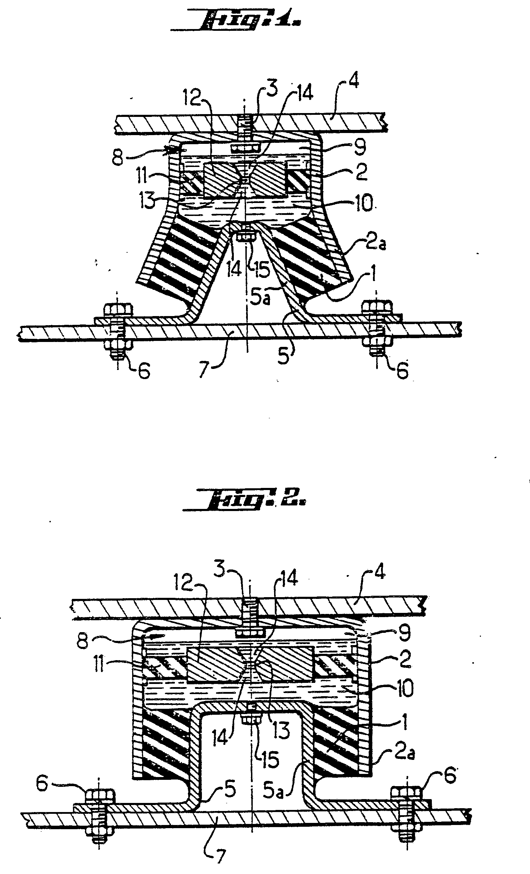

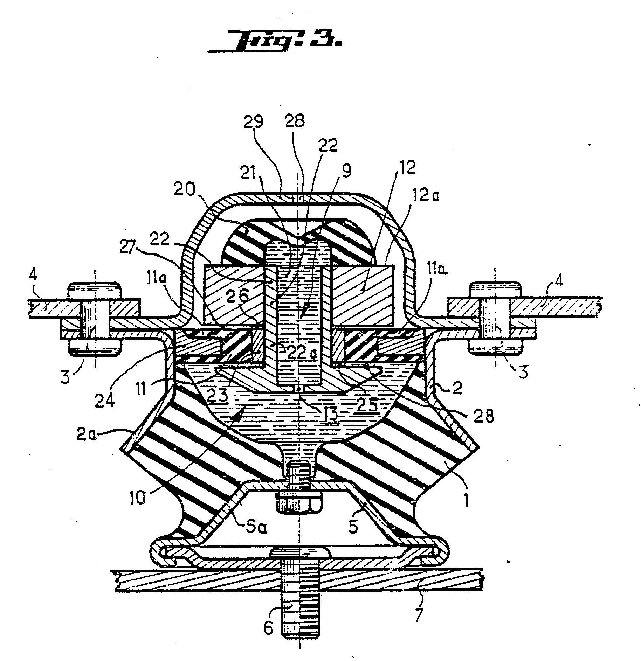

La figure 1 est une vue en coupe axiale d'un dispositif de suspension ou amortisseur conforme aux principes de l'invention; la figure 2 est une vue en coupe axiale d'un deuxième mode de réalisation de ce dispositif de suspension; et la figure 3 est une vue en coupe axiale d'encore un autre mode de réalisation du dispositif de suspension.

En se reportant aux dessins annexés, un dispositif de suspension conforme à l'invention comprend essentiellement un support 1 élastiquement déformable, par exemple en caoutchouc, adhérisé entre une armature supérieure 2 solidaire en 3 d'un élément porté 4, tel que par exemple le moteur d'un véhicule automobile, et une armature inférieure 5 solidaire en 6 d'un élément porteur 7, tel que par exemple la caisse du véhicule.

Comme on le voit sur les figures 1 et 2, les armatures 2 et 5 ainsi que le support élastique 1 définissent une chambre étanche 8 contenant un fluide, par exemple un liquide à base d'eau et d'antigel.

La chambre 8 est partagée en deux chambres supérieure 9 et inférieure 10 par une cloison séparatrice se composant d'une partie annulaire souple et élastique 11 adhérisée à l'armature supérieure 2 et portant de préférence en son centre, en étant adhérisée sur lui, un bloc 12 de matière constituant une certaine masse d'un poids convenable et défini en fonction de la rigidité de la cloison 11. En d'autres termes, le bloc 12 est suspendu à la cloison 11 qui fait office de ressort, comme on l'expliquera en détail plus loin à propos du fonctionnement.

Le bloc massif 12 comporte en son centre, suivant l'exemple de réalisation des figures 1 et 2, un orifice calibré 13 qui débouche dans les chambres supérieure 9 et inférieure 10 par l'intermédiaire de deux évidements 14 sensiblement coniques et opposés pratiqués dans ledit bloc 12 de part et d'autre de l'orifice 13.

On a montré en 15 un bouchon ou analogue de fermeture permettant le remplissage partiel des chambres 9 et 10 de liquide.

Suivant l'exemple de réalisation représenté sur les figures 1 et 3, les armatures 2 et 5 présentent une forme sensiblement conique avec des parties obliques sensiblement parallèles 2a et 5a, de sorte que, l'armature supérieure 2 enveloppant ou entourant coaxialement l'armature inférieure 5, le support élastiquement déformable 1 soit adhérisé sur les parties précitées 2a et 5a, comme on le voit clairement sur les figures 1 et 3.

Le mode de réalisation représenté sur la figure 2 procède du même principe qu'énoncé ci-dessus. C'est pourquoi on a utilisé les mêmes repères. Toutefois, dans ce cas, on voit que l'armature supérieure 2 ainsi que l'armature inférieure 5 entourée par l'armature 2, présentent une forme sensiblement cylindrique. Et le support élastiquement déformable 1 est adhérisé au niveau des parties verticales correspondantes 2a et 5a des armatures 2 et 5 respectivement.

On peut avantageusement prévoir des clapets ou analogues (non représentés), par exemple à ressort, qui seraient associés à l'orifice de calibrage 13 pour par exemple réguler le débit de liquide passant par l'orifice entre les deux chambres 9 et 10.

Selon le mode de réalisation illustré par la figure 3, une enveloppe déformable 20 est rapportée, par exemple adhérisée, sur la partie supérieure 12a du bloc 12 supporté par la cloison annulaire élastique 11. L'enveloppe 20, le bloc 12, la cloison séparatrice 11 et le support élastique 1 définissent ainsi la chambre supérieure 9 et la chambre inférieure 10. Mais dans ce mode de réalisation, on voit que l'enveloppe 20 ferme la chambre supérieure 9 pour isoler en quelque sorte le fluide par rapport aux armatures 2, 5.

Une pièce tubulaire 22 est fixée au bloc 12, dans une ouverture 21 et fait saillie à la partie inférieure de celui-ci. Cette pièce 22 comporte à l'une de ses extrémités l'orifice précité 13 et est supportée avec le bloc 12, par la cloison élastique 11.

En effet, la cloison 11 est solidaire de la partie 22a de la pièce 22, par l'intermédiaire d'un bague 23. Et elle est solidaire de l'armature supérieure 2 par l'intermédiaire d'une couronne périphérique 24 qui a encore pour rôle de limiter les mouvements de la masse mobile 12, comme on l'expliquera ci-après.

On a montré en 25 et 26 sur la figure 3 des cales d'épaisseur interposées de part et d'autre de la cloison élastique 11. La pièce tubulaire 22 doit être considérée comme formant partie intégrante du bloc 12. On a montré en 29 un capot de protection du dispositif amortisseur de la figure 3, lequel capot comporte un orifice 28 de mise à l'air libre.

Le fonctionnement et les avantages du dispositif de suspension des figures 1 à 3 sont les suivants.

Tout d'abord, en ce qui concerne les vibrations de basses fréquences, celles-ci provoquent un mouvement relatif de l'armature supérieure 2 par rapport à l'armature inférieure 5, et engendrent par conséquent des variations de volume dans la chambre inférieure 10, forçant ainsi le liquide à circuler alternativement d'une chambre à l'autre à travers l'orifice calibré 13. Bien entendu, la rigidité de la partie élastique 11 de la cloison séparatrice doit être suffisante pour que le dispositif procure un certain amortissement. Et il a été constaté que le dispositif de l'invention procurait un amortissement à basse fréquence bien supérieur à celui obtenu avec les dispositifs antérieurs constitués seulement par des supports élastiques en caoutchouc ou analogue adhérisé.

Pour ce qui est des vibrations à haute fréquence engendrant du bruit, c'est-à-dire entre environ 100 et 200 Hz et qui, comme on l'a vu plus haut, sont situées dans une zone de fréquences bien précise, celles-ci provoquent également un mouvement de liquide alternatif à travers l'orifice calibré 13. Mais c'est là qu'intervient le rôle de ressort de la cloison élastique séparatrice portant en outre, conformément à l'invention, le bloc ou la masse 12. En effet, grâce à l'inertie de ce bloc, possédant un certain poids, la cloison séparant les deux chambres 9 et 10 ne se déforme plus simplement en suivant le déplacement de l'armature supérieure 2, mais avec un certain retard ou déphasage provoquant à travers l'orifice calibré 13, un débit de liquide de sens inverse par rapport à celui noté à basse fréquence.

Plus précisément, le déplacement du bloc 12 s'effectue d'abord dans le sens opposé à celui de l'armature 2 solidaire de l'élément porté 4, ce qui provoque une augmentation sensible de pression dans la chambre 9 au-dessus de la cloison séparatrice. Ainsi, par modification de l'amortissement dans le sens de la diminution, cette modification pouvant aller jusqu'à l'inversion du sens d'action de l'amortissement, on diminue considérablement les efforts de réaction de l'élément porté 4, c'est-à-dire les efforts qui sont transmis aux fréquences élevées.

En bref, lorsqu'on est en présence de vibrations à basse fréquence, les mouvements de la cloison séparatrice avec le bloc 12 coïncident avec ceux de l'armature supérieure 2, tandis que, lorsqu'on est en présence de vibrations à hautes fréquences, les mouvements de la cloison séparatrice, grâce au bloc 12, retardent sur ceux de ladite armature, ce qui permet ainsi de réduire considérablement la transmission des bruits.

On ajoutera encore ici que les supports élastiquement déformables 1, en plus de leur fonction d'étanchéité, jouent avantageusement le rôle de ressorts.

En ce qui concerne le fonctionnement du mode de réalisation de la figure 3, on ajoutera les précisions suivantes.

Les cales 25 et 26 procurent un jeu entre le bloc et la cloison 11, comme on l'a montré en 27 et 28, ce qui permet un mouvement libre du bloc 12 dans le sens axial du dispositif jusqu'à une amplitude égale à l'épaisseur des cales 25 et 26. Et, un mouvement d'amplitude plus grand de la masse mobile 12 sera limité par un contact de butée de ladite masse avec la partie 11a de la cloison 11, située entre cette masse et la couronne 24 qui joue en quelque sorte le rôle de butée élastique pour le bloc 12 lors de ses divers mouvements ou débattements.

Dès lors, l'enveloppe déformable 20, qui réalise en quelque sorte la fermeture des chambres étanches 9 et 10 permet d'isoler le fluide amortisseur par rapport aux armatures, et, compte tenu de son élasticité, elle permet de compenser les variations de volume dudit fluide lors des transfert alternatifs de celui-ci entre les deux chambres 9 et 10 par l'orifice 13.

Bien entendu, l'invention n'est nullement limitée aux modes de réalisation décrits et illustrés qui n'ont été donnés qu'à titre d'exemple. C'est ainsi que la matière du bloc 12, ainsi que la configuration des armatures 2 et 5 peuvent être quelconques sans sortir du cadre de l'invention.

## Revendications

1. Dispositif de suspension d'un élément porté (4) à un élément porteur (7) et comprenant au moins un support (1) élastiquement déformable, par exemple en caoutchouc, agencé entre deux armatures (2, 5) solidaires desdits éléments de façon à définir une chambre (8) étanche, laquelle chambre contient un fluide et est partagée en deux par une cloison (11) formée d'une partie élastique solidaire de l'un desdits éléments et portant un organe (12) pourvu d'au moins un orifice calibré (13) permettant le passage du fluide d'un côté vers l'autre de la cloison, caractérisé en ce que ledit organe (12) est constitué par un bloc massif (12) suspendu à ladite cloison (11) qui, en raison de l'inertie du bloc et de l'élasticité de la cloison, se déforme avec un retard ou déphasage par rapport au déplacement de l'élément porté (4), de nature à provoquer à travers ledit orifice (13) et pour une fréquence dite haute, de l'ordre de 100 à 200 Hz, un débit de fluide inversé par rapport à celui obtenu à des fréquences plus basses, entre les deux parties (9, 10) de ladite chambre étanche (8).

2. Dispositif selon la revendication 1, caractérisé en ce qu'une enveloppe déformable (20) est rapportée sur le bloc (12) pour ferme le chambre étanche (8) et isoler le fluide par rapport aux armatures (2, 5).

3. Dispositif selon la revendication 1 ou 2, caractérisé en ce que dans le bloc (12) est fixée une pièce tubulaire (22) faisant saillie à la partie inférieure de celui-ci, laquelle pièce comporte l'orifice (13) à l'une des ses extrémités et est supportée avec le bloc (12), par la cloison élastique (11).

4. Dispositif selon l'une des revendications 1 à 3, caractérisé en ce que l'amplitude du mouvement du bloc (12) est fixée par des cales d'épaisseur (25, 26) interposées de part et d'autre de la cloison (11) et en ce que les mouvements du bloc sont limités par une couronne (24) solidaire de l'une (2) des armatures et sur laquelle est montée ou adhérée la cloison élastique (11).

5. Dispositif selon la revendication 1 ou 3, caractérisé en ce que des clapets à ressort sont associés à l'orifice précité (13).

6. Application du dispositif selon l'une des revendications 1 à 6, à la suspension du moteur ou d'autres organes mécaniques d'un véhicule automobile.

## Patentansprüche

1. Vorrichtung zur Aufhängung eines von einem Trägeelement (7) getragenen Elementes (4), mit wenigstens einem elastisch verformbaren Halter (1), zum Beispiel aus Kunstgummi, der zwischen zwei mit den genannten Elementen fest verbundenen Beschlägen (2, 5) angeordnet ist, so dass eine dichte Kammer (8) gebildet wird, die durch eine Trennwand (11) zweigeteilt wird, die von einem mit einem der genannten Elemente fest verbundenen elastischen Teil gebildet wird und ein Organ (12) trägt, das mit wenigstens einer geeichten Öffnung (13) versehen ist, die den Durchfluss des Mittels durch die Trennwand von einer Seite zu anderen erlaubt, dadurch gekennzeichnet, dass das genannte Organ (12) von einem massiven Block (12) gebildet wird, der an der genannten Trennwand (12) aufgehängt ist, die wegen der Trägheit des Blockes und der Elastizität der Trennwand sich mit einer Verzögerung oder Phasenverschiebung bezüglich der Bewegung des getragenen Elementes verformt, um bei einer sogenannten hohen Frequenz in der Grössenördnung von 100 bis 200 Hz einen Durchsatz an Mittel durch die genannte Öffnung (13) hindurch zwischen den zwei Teilen (9, 10) der genannten dichten Kammer (8), zu erzeugen, der umgekehrt ist bezogen auf den Durchsatz, der sich bei niedrigeren Frequenzen einstellt.

2. Vorrichtung nach Anspruch 1, dadurch gekennzeichnet, dass ein verformbarer Mantel (20) auf den Block (12) aufgebracht wird, um die dichte Kammer (8) zu schliessen und das Mittel oder Flussmittel bezüglich der Beschläge (2, 5) zu isolieren.

3. Vorrichtung nach einem der Ansprüchen 1 oder 2, dadurch gekennzeichnet, dass in dem Block (12) ein rohrförmiges Teil (22) befestigt ist, dass über dessen unteren Teil hervorsteht, wobei das Teil die Öffnung (13) an einer seinen Enden aufweist und mit dem Block (12) durch die elastische Trennwand (11) getragen wird.

4. Vorrichtung nach einem der Ansprüche 1 bis 3, dadurch gekennzeichnet, dass die Bewegungsamplituden des Blockes (12) durch Dickenkeile (25, 26) festgelegt wird, die auf beiden Seiten der Trennwand (11) angeordnet sind, und dadurch dass die Bewegungen des Blockes durch eine Krone (24) begrenzt werden, die fest mit einem (2) der Beschläge verbunden ist und auf der die elastische Trennwand (11) angebracht ist oder anhaftet.

5. Vorrichtung nach Anspruch 1 oder 3, dadurch gekennzeichnet, dass Federventile der genannten Öffnung (13) zugeordnet sind.

6. Verwendung der Vorrichtung nach einem der Ansprüche 1 bis 6 zur Aufhängung des Motors und anderer mechanischer Organe eines Fahrzeuges.

**Claims**

1. A device for suspending a borne element (4) from a bearing element (7) and comprising at least one resiliently deformable support (1), for example of rubber, arranged between two frames (2, 5) attached to the said elements so as to define a fluid-tight chamber (8), which chamber contains a fluid and is divided in two by a partition (11) constituted by a resilient portion secured to one of the said elements and bearing a member (12) provided with at least one calibrated orifice (13) allowing the passage of the fluid from one side of the partition to the other, characterized in that the said member (12) is constituted by a solid block (12) suspended from the said partition (11) which, owing to the inertia of the block and to the resiliency of the partition, is deformed with a delay or difference in phase with respect to the displacement of the borne element (4), of a nature to produce through the said orifice (13) and for a so-called high frequency, of the order of 100 to 200 cps, a flow of fluid reversed with respect to the one obtained at lower frequencies, between the two portions (9, 10) of the said fluid-tight chamber (8).

2. A device according to claim 1, characterized in that a deformable casing (20) is secured on the block (12) to close the fluid-tight chamber (8) and isolate the fluid with respect to the frames (2, 5).

3. A device according to claim 1 or 2, characterized in that there is secured in the block (12) a tubular member (22) projecting from the upper portion of the latter, the said member being provided with an orifice (13) at one of its ends and being supported together with the block (12) by the resilient partition (11).

4. A device according to one of claims 1 to 3, characterized in that the amplitude of the motion of the block (12) is determined by shims (25, 26) interposed on either side of the partition (11) and in that the movement of the block is limited by a ring (24) secured to one (2) of the frames and on which is mounted or adhesively secured the resilient partition (11).

5. A device according to claim 1 or 3, characterized in that spring valves are associated with the aforesaid orifice (13).

6. Application of the device of one of claims 1 to 6 to the suspension of an engine or of other mechanical members of an automotive vehicle.

Fig. 1.

Fig. 2.

1

## Fig. 3.